# EUROPÄISCHE PATENTSCHRIFT

(11) **EP 0 341 597 B1**
(45) Veröffentlichungstag und Bekanntmachung des Hinweises auf die Patenterteilung: **15.12.1993**
(21) Anmeldenummer: 89108129.1
(22) Anmeldetag: 05.05.1989
(51) Int. Cl.: F16F 9/46, B60G 17/08

(54) **Stossdämpfer mit veränderbarer Dämpfungscharakteristik**
Shock absorber with an adjustable damping characteristic
Amortisseurs de chocs à caractéristique d'amortissement variable

(30) Priorität: 13.05.1988 DE 3816351
(43) Veröffentlichungstag der Anmeldung: 15.11.1989
(73) Patentinhaber: KÖRBER AG, D-21027 Hamburg (DE)
(72) Erfinder: Komossa, Werner, D-2050 Börnsen (DE)

(56) Entgegenhaltungen:
- EP-A- 0 200 446
- EP-A- 0 330 634
- WO-A-85/04698
- WO-A-89/05929
- FR-A- 1 278 090
- FR-A- 2 552 515
- FR-A- 2 588 343

## Beschreibung

Die Erfindung betrifft einen Stoßdämpfer mit veränderbarer Dämpfungscharakteristik, insbesondere für Kraftfahrzeuge, der mindestens einen mit einem Dämpfungsmedium gefüllten Zylinder und eine Kolbenstange aufweist, die abgedichtet in den Zylinder eintaucht und die an ihrem zylinderseitigen Ende einen gegen die Zylinderwand abgedichteten, mit der Kolbenstange verschiebbaren Kolben trägt, der den Zylinderraum in zwei Kammern aufteilt und einen Durchlaß mit elektrisch mittelbar steuerbarem Querschnitt aufweist, durch den Dämpfungsmedium von einer Kammer mit höherem Druck in die andere Kammer mit geringerem Druck strömt, wobei sich der Durchlaß zwischen dem Kolben und einem relativ zu diesem beweglichen Schieber befindet, und wobei auf den Schieber eine erste Kraft, die von einer ersten Fläche, die von Dämpfungsmedium des höheren Druckes, der von der Kolbenbewegung hervorgerufen wird, oder von einem davon abgeleiteten Druck, beaufschlagt ist, erzeugt wird, und eine entgegengerichtete zweite Kraft, die von einer zweiten Fläche, die von Dämpfungsmedium, dessen Druck elektrisch unmittelbar steuerbar ist, beaufschlagt ist, erzeugt wird, derart einwirkt, daß die Differenz der Kräfte den Durchlaßquerschnitt bestimmt und wobei zwischen einem Druckraum mit dem in seinem Druck steuerbaren Dämpfungsmedium und der gerade drucklosen Kammer ein elektrisch unmittelbar steuerbares Ventil angeordnet ist.

Die FR-A-2552515 beschreibt einen Stoßdämpfer mit veränderbarer Dämpfungscharakteristik, der einen mit einem Dämpfungsmedium gefüllten Zylinder und eine Kolbenstange aufweist, die abgedichtet in den Zylinder eintaucht und die an ihrem zylinderseitigen Ende einen gegen die Zylinderwand abgedichteten mit der Kolbenstange verschiebbaren Kolben trägt, der den Zylinderraum in zwei Kammern aufteilt. Durch einen Durchlaß mit elektrisch mittelbar steuerbarem Querschnitt, der gebildet wird von einem zu dem Kolben beweglichen Schieber, kann Dämpfungsmedium von einer Kammer mit höherem Druck in eine andere Kammer mit geringerem oder fehlendem Druck strömen. Der Schieber wird hierbei von einer ersten Kraft und einer dagegen wirkenden zweiten Kraft beaufschlagt, so daß die Differenz der Kräfte den Durchlaßquerschnitt bestimmt. Die erste Kraft wird dabei erzeugt von einer ersten Fläche, die von dem Dämpfungsmedium des höheren von der bewegten Kolbenstange hervorgerufenen Drucks beaufschlagt ist; die zweite Kraft wird erzeugt von einer zweiten Fläche, die von Dämpfungsmedium, dessen Druck elektrisch unmittelbar gesteuert wird, beaufschlagt ist. Das Dämpfungsmedium zur Erzeugung der zweiten Kraft befindet sich in einem Druckraum, der mit der gerade drucklosen Kammer über ein den Druck unmittelbar steuerndes Ventil verbunden ist. Die bekannte Steueranordnung weist zwei komplizierte Federanordnungen auf, von denen eine in der Zugstufe, die andere in der Druckstufe eine mechanische Rückstellkraft auf das Steuerventil ausübt. Dieses ist als sogenanntes Wegeventil ausgebildet, bei dem die Auslenkung des Ventilkörpers der Steuerspannung entsprechen muß und das daher empfindlich ist. Infolge dieser konstruktiven Ausbildung ist die bekannte Vorrichtung wenig geeignet für einen rauhen stoßartigen Betrieb, wie er in Stoßdämpfern vorherrscht.

Die der Erfindung zugrundeliegende Aufgabe besteht in einem Stoßdämpfer der eingangs genannten Art, bei dem der für die Steuerung des Dämpfungsverhaltens dienende Teil mechanisch einfach aufgebaut ist und kleine Abmessungen gestattet, so daß er völlig im Inneren des Stoßdämpfers untergebracht werden kann.

Gemäß der Erfindung wird diese Aufgabe dadurch gelöst, daß der Druckraum mit dem in seinem Druck steuerbaren Dämpfungsmedium zum Erzeugen der zweiten Kraft mit der Kammer mit dem jeweils höheren Druck über einen Umschalter verbindbar ist, der auch das Ventil mit der Kammer mit dem jeweils niedrigeren Druck verbindet.

Weitere vorteilhafte Ausgestaltungen der Erfindung sind den untergeordneten Ansprüchen zu entnehmen.

Die Erfindung weist bedeutende Vorteile auf. Eine Steuerung der Dämpfung ist sowohl bei Zug- als auch bei Druckbelastung mit nur einem elektromagnetisch betätigten Ventilsystem möglich, wobei bei ein und erselben elektrischen Steuergröße unterschiedliche Dämpfungen bei Zug- und Druckbelastung erreichbar sind. Zum Realisieren dieses Vorteils ist nur ein einfacher Umschalter erforderlich. Die Erregerspule des Elektromagnetsystems ist im Kolben so befestigt, daß sie keine Relativbewegung gegenüber diesem ausführt. Das elektromagnetische Ventilsystem bereitet nicht die Schwierigkeiten eines sogenannten Wegeventils, bei dem die Auslenkung des Ventilkörpers der Steuerspannung entsprechen muß, weil das Ventil gemäß der Erfindung als Druckbegrenzer für den Druckraum des Dämpfungsmediums zum Erzeugen der zweiten Kraft ausgebildet sein kann. Bei Ausfall des Elektromagnetventils geht der Stoßdämpfer automatisch in seine härteste und sicherste Position.

Die Erfindung wird anhand der Zeichnung beispielsweise näher erläutert.

Es zeigen:
- Figur 1: einen Stoßdämpfer gemäß der Erfindung im Längsschnitt, teilweise ausgebrochen,
- Figur 2: einen Querschnitt nach Linie II-II in Figur 1, teilweise ausgebrochen,
- Figur 3: eine Steueranordnung zum Speisen eines Elektromagnetventils mit einer Spannung, deren Größe der gewünschten Dämpfung entspricht,
- Figur 4: eine Steueranordnung zum Speisen eines Elektroventils mit einer Impuls folge, deren Frequenz der gewünschten Dämpfung entspricht.

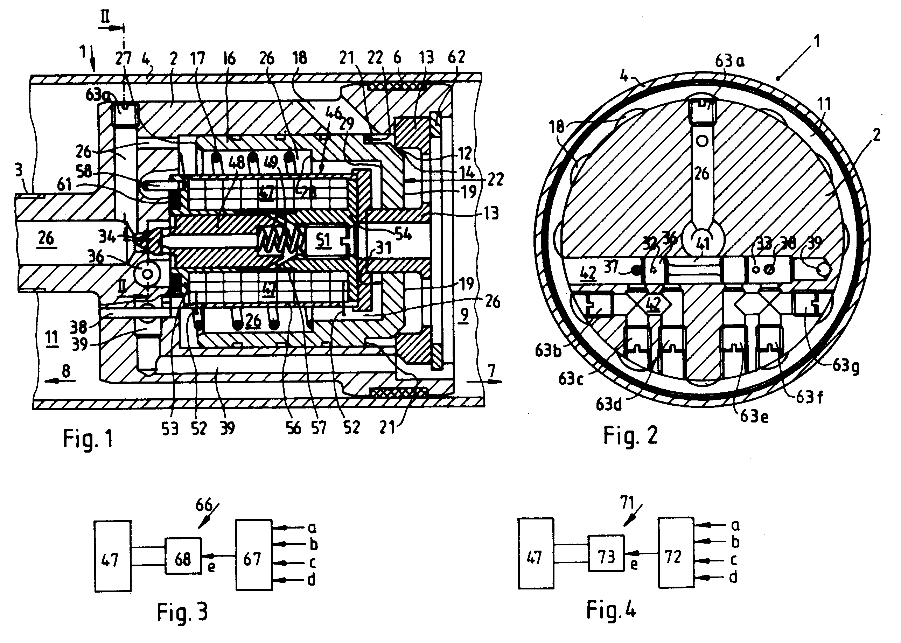

In den Figuren 1 und 2 ist nur der Teil eines Stoßdämpfers 1 dargestellt, der den erfindungswesentlichen Teil enthält, nämlich den Kolben 2 (einschließlich der in ihm angeordneten Steuerungsanordnung) mit Kolbenstange 3 und dem den Kolben umgebenden zylindrischen Rohr 4. Die zu dämpfenden Massen sind in nicht sichtbarer bekannter Weise an der Kolbenstange 3 einerseits und dem Rohr 4 befe-stigt. Der Kolben 2, der mittels einer Ringdichtung 6 an der Innenseite des Rohres 4 anliegt, ist bei Druckbelastung in Richtung des Pfeils 7, bei Zugbelastung in Richtung des Pfeils 8 zusammen mit der Kolbenstange 3 relativ zum Rohr 4 verschiebbar. Der Kolben 2 trennt zwei Kammern 9 und 11 voneinander, in denen Dämpfungsmedium, z. B. Dämpfungsöl, enthalten ist. Bei einer Verschiebung des Kolbens 2 in Richtung des Pfeils 7 bei Druckbelastung des Stoßdämpfers kommt das Öl in der Kammer 9 unter Druck und soll durch einen Kanal in die drucklose Kammer 11 strömen. Bei umgekehrter Verschiebung des Kolbens 2 in Richtung des Pfeils 8 bei Zugbelastung des Stoßdämpfers soll das Öl umgekehrt von Kammer 11 in die drucklose Kammer 9 strömen. Der Strömungskanal, dessen Querschnitt bei gegebenem Druck in einer unter Druck stehenden Kammer mittelbar steuerbar sein soll, wird von der Kante 12 eines Drosselrings 13 und einer Schrägfläche 14 eines relativ zu dem Kolben 2 axial verschiebbaren beweglichen Schiebers 16 gebildet. Eine schwache Feder 17 sorgt für eine Anlage der Schrägfläche 14 an der Kante 12, wenn kein Druckunterschied im Öl der Kammern 9 und 11 besteht. 18 sind Verbindungskanäle im Kolben 2. Die Anordnung der Kante 12 gegen Schrägfläche 14 ist besonders vorteilhaft, weil in besonders einfacher Weise durch Änderung der Lage der Kante bezüglich der Schrägfläche das Dämpfungsverhalten in der Zug- oder Druckstufe bei ein und demselben Steuersignal geändert werden kann.

Der Schieber 16 hat Druckflächen, auf die das Öl in der Kammer 9 bei Druckbelastung wirkt. Es sind dies die sich unterhalb der Kante 12 befindliche Schrägfläche 14 und die sich in Achsrichtung nach innen anschließende Kreisringfläche 19. Der Schieber 16 hat außerdem Druckflächen, auf die das Öl in der Kammer 11 bei Zugbelastung wirkt. Es sind dies die sich oberhalb der Kante 12 befindliche Schrägfläche 14 und die sich nach außen anschließende Kreisringfläche 21. Sowohl bei Druckbelastung als auch bei Zugbelastung wirkt der Druck des Öls in den Kammern 9 und 11 in der gleichen Richtung, nämlich in Richtung des Pfeils 22. Die Kräfte sind aber infolge der unterschiedlichen Flächen verschieden. Weil bei Druckbelastung des Stoßdämpfers die Dämpfung "weicher" sein soll, ist die Fläche für das Öl in Kammer 9 größer als die Fläche für das Öl in der Kammer 11. Eine in Richtung des Pfeils 22 gerichtete Kraft wird erste Kraft genannt.
In einem Druckraum 26 befindet sich Dämpfungsmedium, also Öl, unter einem Druck, der niedriger ist als der Druck in der jeweils unter Druck stehenden Kammer 9 oder 11 und der unmittelbar elektrisch gesteuert einstellbar ist. Der Druck wirkt auf die Kreisringflächen 27, 28 und 29 des Schiebers 16 und erzeugt eine zweite Kraft in Richtung des Pfeils 31, die der ersten Kraft entgegengerichtet ist, gleichgültig von welchem Öl (9 oder 11) diese Kraft aufgebracht wird. Innerhalb des Schiebers 16 befindet sich das elektrische Steuersystem zur mittelbaren Einstellung der Dämpfung bei Druck- und Zugbelastung des Stoßdämpfers. Seine Wirkung beruht darauf, daß der Druck des Öls im Druckraum 26, das zum Erzeugen der zweiten Kraft dient, einstellbar ist. Das Öl gelangt von der unter Druck stehenden Kammer 9 oder 11 durch kalibrierte Bohrungen 33 (Kammer 9) und 32 (Kammer 11) in den Druckraum 26 und von da durch einen ringförmigen Durchlaß an einem Ventilkegel 34 zu der jeweils drucklosen Kammer 9 oder 11. In dem Weg des Öls vom Ventilkegel 34 zu der gerade drucklosen Kammer befindet sich ein hydraulischer Umschalter 36, der insbesondere aus Figur 2 hervorgeht. Dieser Umschalter 36, der im wesentlichen aus einem Steuerkolben besteht, ist von dem Öl derjenigen Kammer, die gerade unter Druck steht, an einen festen Anschlag 37, 38 bewegbar. In der in Figur 2 gezeigten Lage ist der Umschalter 36 von dem unter Druck stehenden Öl der Kammer 9, das durch einen Kanal 39 zugeleitet wurde, an Anschlag 37 bewegt worden. Das Öl kann nunmehr vom Druckraum 26 an dem Ventilkegel 34 vorbei durch Raum 41 und Leitung 42 zu der drucklosen Kammer 11 fließen.
Kommt bei einem Wechsel der Belastungsrichtung des Stoßdämpfers die Kammer 11 unter Druck, so wird der Steuerkolben 36 gegen den Anschlag 38 geschoben, so daß Öl vom Druckraum 26 an dem Ventilkegel 34 vorbei durch Raum 41 und Kanal 39 zu der drucklosen Kammer 9 fließen kann. Die Funktion des Umschalters 36 besteht somit darin, den Druckraum 26 mit der jeweils drucklosen Kammer zu verbinden.
Im vorigen wurde schon ausgeführt, daß der Druck des Öls im Druckraum 26 bestimmend ist für die zweite Kraft, die in Richtung des Pfeils 31 der ersten Kraft (Pfeil 22), die von dem unter Druck stehenden Öl aus den Kammern 9 oder 11 herrührt, entgegenwirkt. Entsprechend der Differenz aus erster und zweiter Kraft verschiebt sich der Schieber 16 in Richtung des Pfeils 22 und öffnet dadurch einen Ringspalt zwischen Kante 12 und Schrägfläche 14, durch den das Öl aus der je nach Belastungsrichtung des Stoßdämpfers gerade unter Druck stehenden Kammer 9 oder 11 in die gerade drucklose Kammer strömen kann. Je geringer der Druck in der Druckkammer 26 ist, um so weiter öffnet der Ringspalt und um so "weicher" ist die Dämpfung.
Zur unmittelbaren Einstellung des Druckes im Druckraum 26 und damit mittelbar der Dämpfung dient das Elektromagnetventil 46, im wesentlichen besteht aus einer fest im Kolben angeordneten Erregerspule 47, einem axial verschiebbaren Ventilkörper 48 mit Ventilkegel 34 und einer Druckfeder 49, die sich gegen eine Einstellschraube 51 und den Ventilkörper 48 abstützt. Wird an die Erregerspule 47 über ihre Anschlüsse 52 eine Steuerspannung gelegt, so wirkt die auf den Ventilkörper 48 wirkende elektromagnetische Kraft in Richtung des Pfeiles 31, also der Wirkung der Druckfeder 49 entgegen. Das im Druckraum 26 befindliche Öl kann somit leichter an dem Ventilkegel 34 vorbei durch den sich bildenden Ringspalt zu der gerade drucklosen Kammer fließen als ohne Erregerspannung. Hierdurch verringert sich der Druck des Öls im Druckraum 26, wodurch die Differenz aus erster Kraft und zweiter Kraft größer wird, der Schieber 16 also weiter ausgelenkt werden kann und die Dämpfung "weicher" wird. Die Größe des Erregerstromes, der die Erregerspule 47 durchfließt, bestimmt somit den Druck im Druckraum 26 und damit die Dämpfungscharakteristik des Stoßdämpfers.
Fällt das elektrische Steuerungssystem aus, so verschwindet die Gegenkraft für die Druckfeder 49, die dann allein wirkt und den Druck im Druckraum 26 auf den maximalen Wert erhöht. Hierdurch geht der Stoßdämpfer in aus Sicherheitsgründen erwünschter Weise in seine härteste Position.
Mit 53, 54 und 56 sind Hülsen aus ferromagnetischem Material bezeichnet, mit 57 eine Hülse aus unmagnetischem Material. 58 ist ein Sicherungsstift zur Sicherung der Spule 47 gegen Verdrehung, 38 ein Begrenzungsstift. 61 ist ein Dichtungsring, 62 ein Sicherungsring. Die Positionen 63a bis 63g stellen Verschlußschrauben dar.

In Figur 3 ist eine Steueranordnung 66 für die Spule 47 dargestellt. Mit 67 ist eine elektrische Rechneranordnung bezeichnet, der von entsprechenden nicht dargestellten Sensoren über Eingänge a ... d elektrische Signale zugeleitet werden, die Informationen über den Straßenzustand und die Fahrzeugzustände (Beschleunigung, Verzögerung, Lenkeinschlag, Geschwindigkeit und dgl.) geben. Diese Signale werden nach bekannten Programmen verrechnet und an einem Ausgang e ein elektrisches Ausgangssignal an einen Verstärker 68 gegeben. Das verstärkte Ausgangssignal von 68 wird der Spule 47 zugeführt und steuert die Dämpfungscharakteristik des Stoßdämpfers auf den im Rechnerproqramm festgelegten optimalen Wert. Ändern sich die Informationssignale, so wird von Verstärker 68 ein neues Ausgangssignal abgegeben, das die Dämpfung des Stoßdämpfers auf einen neuen Wert verstellt.

In Figur 4 ist eine Steueranordnung 71 dargestellt, bei der eine Rechneranordnung 72 nicht mehr ein analoges Ausgangssignal abgibt, das verstärkt wird und den Druck im Druckraum 26 über eine konstant aufgebrachte Gegenkraft zur Kraft der Druckfeder 49 steuert. Die Rechneranordnung 72 gibt vielmehr eine Impulsfolge ab, die im Verstärker 73 verstärkt wird und das Elektromagnetventil 47 vorzugsweise sehr schnell zwischen minimaler und maximaler Kraftwirkung hin- und herschaltet, etwa wie ein sogenanntes Flatterventil, ohne daß das Ventil allerdings auf- und zugeschaltet wird. Infolge der hydraulischen und mechanischen Dämpfung machen sich diese Wechsel nicht im Dämpfungsverhalten des Stoßdämpfers insgesamt bemerkbar. Die Steuerung kann bei konstanter Impulslänge über die Frequenz erfolgen. Bei gleichen zeitlichen Abständen zwischen den Steuerimpulen kann deren Länge variiert werden. Schließlich können beide Größen, also Impulslänge und Länge der Zwischenzeiten, variiert werden.

## Patentansprüche

1. Stoßdämpfer mit veränderbarer Dämpfungscharakteristik, insbesondere für Kraftfahrzeuge, der mindestens einen mit einem Dämpfungsmedium gefüllten Zylinder (4) und eine Kolbenstange (3) aufweist, die abgedichtet in den Zylinder eintaucht und die an ihrem zylinderseitigen Ende einen gegen die Zylinderwand abgedichteten, mit der Kolbenstange verschiebbaren Kolben (2) trägt, der den Zylinderraum in zwei Kammern (9, 11) aufteilt und einen Durchlaß mit elektrisch mittelbar steuerbarem Querschnitt aufweist, durch den Dämpfungsmedium von einer Kammer mit höherem Druck in die andere Kammer mit geringerem Druck strömt, wobei sich der Durchlaß zwischen dem Kolben (2) und einem relativ zu diesem beweglichen Schieber (16) befindet, und wobei auf den Schieber eine erste Kraft, die von einer ersten Fläche (14, 19; 14, 21), die von Dämpfungsmedium des höheren Druckes, der von der Kolbenbewegung hervorgerufen wird, oder von einem davon abgeleiteten Druck, beaufschlagt ist, erzeugt wird, und eine entgegengerichtete zweite Kraft, die von einer zweiten Fläche (27, 28, 29), die von Dämpfungsmedium, dessen Druck elektrisch unmittelbar steuerbar ist, beaufschlagt ist, erzeugt wird, derart einwirkt, daß die Differenz der Kräfte den Durchlaßquerschnitt bestimmt und wobei zwischen einem Druckraum (26) mit dem in seinem Druck steuerbaren Dämpfungsmedium und der gerade drucklosen Kammer ein elektrisch unmittelbar steuerbares Ventil (46) angeordnet ist, dadurch gekennzeichnet, daß der Druckraum (26) mit dem in seinem Druck steuerbaren Dämpfungsmedium zum Erzeugen der zweiten Kraft mit der Kammer mit dem jeweils höheren Druck über einen Umschalter (36) verbindbar ist, der auch das Ventil (46) mit der Kammer mit dem jeweils niedrigeren Druck verbindet.

2. Stoßdämpfer nach Anspruch 1, gekennzeichnet durch einen vom Druck in der Kammer mit dem jeweils höhren Druck vorzugsweise direkt gesteuerten Umschalter (36).

3. Stoßdämpfer nach Anspruch 1 und/oder 2, dadurch gekennzeichnet, daß das elektrisch steuerbare Ventil (46) den Querschnitt nur eines Strömungskanals unmittelbar steuert und daß es auf seinen Sitz von einer Feder (49) im Schließsinn gedrückt wird.

4. Stoßdämpfer nach Anspruch 3, dadurch gekennzeichnet, daß ein steuerbarer Elektromagnet (67, 49) entgegen der Wirkung der Feder (49) auf das Ventil im Öffnungssinn einwirkt.

5. Stoßdämpfer nach Anspruch 3 und/oder 4, dadurch gekennzeichnet, daß das elektrisch unmittelbar steuerbare Ventil (46) einen axial verschiebbaren Ventilkörper (48) mit einem Ventilkegel (34) aufweist, der mit einem kreisförmigen Strömungskanal so zusammenwirkt, daß der Durchlaßquerschnitt für das strömende Dämpfungsmedium kreisringförmig ist.

6. Stoßdämpfer nach einem oder mehreren der vorhergehenden Ansprüche, dadurch gekennzeichnet, daß das elektrisch steuerbare Ventil eine Strömung zur Beeinflussung des Drucks im Druckraum (26) sowohl bei Zug- als auch bei Druckbelastung des Stoßdämpfers unmittelbar steuert.

7. Stoßdämpfer nach einem oder mehreren der vorhergehenden Ansprüche, dadurch gekennzeichnet, daß das elektrisch unmittelbar steuerbare Ventil (46) im Strömungsweg von Dämpfungsflüssigkeit zwischen dem Druckraum (26) und der Kammer mit dem jeweils niedrigeren Druck angeordnet ist.

8. Stoßdämpfer nach einem oder mehreren der vorhergehenden Ansprüche, dadurch gekennzeichnet, daß die von dem unter Druck stehenden Dämpfungsmedium beaufschlagten Flächen (14, 19; 14, 22) des beweglichen Schiebers (16) zum Erzeugen der ersten Kraft bei Zug- und Druckbelastung in ihrer Größe unterschiedlich sind.

9. Stoßdämpfer nach einem oder mehreren der vorhergehenden Ansprüche, gekennzeichnet durch eine Steueranordnung zur Abgabe einer Steuerspannung für die elektrische Spule zum unmittelbaren Steuern des Drucks des Dämpfungsmediums im Druckraum (26) zum Erzeugen der zweiten Kraft.

10. Stoßdämpfer nach Anspruch 9, gekennzeichnet durch eine Steueranordnung (66), die zum unmittelbaren Einstellen eines bestimmten Druckes des Dämpfungsmediums im Druckraum (26) eine Steuerspannung vorgegebener Größe abgibt.

11. Stoßdämpfer nach Anspruch 9, gekennzeichnet durch eine Steueranordnung (71), die zum unmittelbaren Einstellen eines bestimmten Drucks des Dämpfungsmediums im Druckraum (26) eine Impulsefolge abgibt.

12. Stoßdämpfer nach Anspruch 11, dadurch gekennzeichnet, daß die Impulsfolge mit unterschiedlicher Frequenz zum unmittelbaren Einstellen eines bestimmten Druckes des Dämpfungsmediums im Druckraum (26) abgebbar ist.

13. Stoßdämpfer nach Anspruch 11, dadurch gekennzeichnet, daß die Impulsfolgen mit Impulsen unterschiedlicher zeitlicher Abstände zum unmittelbaren Einstellen eines bestimmten Drucks des Dämpfungsmediums im Druckraum (26) abgebbar ist.

## Claims

1. Shock absorber with variable damping characteristic, in particular for motor vehicles, which has at least one cylinder (4) filled with a damping medium and one piston rod (3) which penetrates into the cylinder in sealed manner and which carries at its cylinder end a piston (2) which is sealed with respect to the cylinder wall and is displaceable with the cylinder rod and which divides the cylinder space into two chambers (9, 11) and has an aperture of electrically indirectly controllable cross-section, through which aperture damping medium flows from a chamber at higher pressure into the other chamber at lower pressure, the aperture being located between the piston (2) and a slide means (16) which is movable relative thereto, and there acting on the slide means a first force, which is generated by a first face (14, 19; 14, 21) which is acted upon by damping medium at the higher pressure which is caused by the piston movement or by a pressure derived therefrom, and a counter-directed second force which is produced by a second face (27, 28, 29) which is acted upon by damping medium whereof the pressure is electrically directly controllable, such that the difference between the forces determines the cross-section of the aperture, and there being arranged between a pressurized space (26) having the pressure-controllable damping medium and the now unpressurized chamber an electrically directly controllable valve (46), characterized in that the pressurized space (26) having the pressure-controllable damping medium to generate the second force can be connected to the chamber having the respectively higher pressure by way of a changeover switch (36) which also connects the valve (46) to the chamber having the respectively lower pressure.

2. Shock absorber according to Claim 1, characterized by a changeover switch (36) which is preferably directly controlled by the pressure in the chamber having the respectively higher pressure.

3. Shock absorber according to Claim 1 and/or 2, characterized in that the electrically controllable valve (46) directly controls the cross-section of only one flow channel, and in that it is pressed onto its seating by a spring (49) in the direction of closure.

4. Shock absorber according to Claim 3, characterized in that a controllable electromagnet (47, 49) acts on the valve in opposition to the action of the spring (49) in the direction of opening.

5. Shock absorber according to Claim 3 and/or 4, characterized in that the electrically directly controllable valve (46) has an axially displaceable valve body (48) having a conical valve means (34) which cooperates with a circular flow channel such that the cross-section of the aperture for the flowing damping medium is annular.

6. Shock absorber according to one or more of the preceding claims, characterized in that the electrically controllable valve directly controls a flow for influencing the pressure in the pressurized space (26) in the event of both a tensile and a pressure load on the shock absorber.

7. Shock absorber according to one or more of the preceding claims, characterized in that the electrically directly controllable valve (46) is arranged in the path of flow of the damping liquid between the pressurized space (26) and the chamber having the respectively lower pressure.

8. Shock absorber according to one or more of the preceding claims, characterized in that the faces (14, 19; 14, 22) of the movable slide means (16) which are acted upon by the pressurized damping medium are of different sizes to generate the first force in the event of tensile and pressure load.

9. Shock absorber according to one or more of the preceding claims, characterized by a control arrangement for emitting a control voltage for the electrical coil for directly controlling the pressure of the damping medium in the pressurized space (26), to generate the second force.

10. Shock absorber according to Claim 9, characterized by a control arrangement (66) which emits a control voltage of predetermined size for directly adjusting a particular pressure of the damping medium in the pressurized space (26).

11. Shock absorber according to Claim 9, characterized by a control arrangement (71) which emits a pulse sequence for directly setting a particular pressure of the damping medium in the pressurized space (26).

12. Shock absorber according to Claim 11, characterized in that the pulse sequence can be emitted at varying frequency for directly setting a particular pressure of the damping medium in the pressurized space (26).

13. Shock absorber according to Claim 11, characterized in that the pulse sequences can be emitted with pulses of varying time intervals for directly setting a particular pressure of the damping medium in the pressurized space (26).

## Revendications

1. Amortisseur à caractéristique d'amortissement variable, notamment pour véhicules automobiles, comportant au moins un cylindre (4) rempli d'un milieu d'amortissement, et une tige de piston (3) plongeant de manière étanche dans le cylindre et portant à son extrémité située côté cylindre, un piston (2) qui peut coulisser avec la tige de piston, qui est rendu étanche par rapport à la paroi du cylindre, qui divise l'espace du cylindre en deux chambres (9, 11) et possède un passage à section transversale pouvant être commandée indirectement de manière électrique, à travers lequel s'écoule du milieu d'amortissement d'une chambre à pression plus élevée dans l'autre chambre à pression plus faible, le passage se trouvant entre le piston (2) et un coulisseau (16) mobile par rapport au piston, le coulisseau étant soumis à une première force engendrée par une première surface (14, 19; 14, 21) sollicitée par du milieu d'amortissement de pression plus élevée suscitée par le mouvement du piston, ou bien par une pression dérivée de cette dernière, et à une seconde force opposée, engendrée par une seconde surface (27, 28, 29) sollicitée par du fluide d'amortissement, dont la pression peut être commandée directement de manière électrique, de faáon a ce que la différence des forces détermine la section du passage, et une soupape (46) susceptible d'être commandée directement de manière électrique, étant disposée entre une chambre de pression (26) comprenant du fluide d'amortissement dont la pression peut être commandée, et la chambre hors de pression à ce moment, caractérisé en ce que la chambre de pression (26) comprenant du fluide d'amortissement dont la pression peut être commandée, en vue d'engendrer la seconde force, peut être reliée à la chambre ayant respectivement la pression la plus élevée, par l'intermédiaire d'un inverseur (36), qui relie également la soupape (46) à la chambre ayant respectivement la pression la plus faible.

2. Amortisseur selon la revendication 1, caractérisé par un inverseur (36) commandé de préférence directement par la pression dans la chambre ayant la pression respectivement la plus élevée.

3. Amortisseur selon la revendication 1 et/ou 2, caractérisé en ce que la soupape (46) pouvant être commandée de manière électrique, ne commande directement la section transversale que d'un seul canal d'écoulement, et en ce qu'elle est poussée sur son siège par un ressort (49), dans le sens de la fermeture.

4. Amortisseur selon la revendication 3, caractérisé en ce qu'un électroaimant (47, 48) pouvant être commandé, agit sur la soupape dans le sens de l'ouverture, à l'encontre de l'action du ressort (49)

5. Amortisseur selon la revendication 3 et/ou 4, caractérisé en ce que la soupape (46) pouvant être commandée directement de manière électrique, comporte un corps de soupape (48) pouvant coulisser axialement et ayant un cône de soupape (34), qui coopère avec un canal d'écoulement de forme circulaire, de manière à ce que la Section transversale de passage pour le milieu d'amortissement soit de forme annulaire circulaire.

6. Amortisseur selon l'une ou plusieurs des revendications précédentes caractérisé en ce que la soupape pouvant être commandée de manière électrique commande directement un écoulement destiné à influencer la pression dans la chambre de pression (26), aussi bien lors d'une sollicitation en traction que lors d'une sollicitation en pression de l'amortisseur.

7. Amortisseur selon l'une ou plusieurs des revendications précédentes, caractérisé en ce que la soupape (46) pouvant être commandée directement de manière électrique, est disposée dans le trajet d'écoulement de liquide d'amortissement, entre la chambre de pression (26) et la chambre présentant respectivement la pression la plus faible.

8. Amortisseur selon l'une ou plusieurs des revendications précédentes, caractérisé en ce que les surfaces (14, 19; 14, 22) du coulisseau mobile (16), qui sont sollicitées par le milieu d'amortissement sous pression et destinées à engendrer la première force, sont de grandeurs différentes lors d'une sollicitation en traction et d'une sollicitation en compression.

9. Amortisseur selon l'une ou plusieurs des revendications précédentes, caractérisé par un agencement de commande destiné à délivrer une tension de commande pour la bobine électrique destinée à la commande directe de la pression du milieu d'amortissement dans la chambre de pression (26), pour engendrer la seconde force.

10. Amortisseur selon la revendication 9, caractérisé par un agencement de commande (66) qui pour l'ajustage direct d'une pression déterminée du milieu de pression dans la chambre de pression (26) délivre une tension de commande d'une grandeur prédéfinie.

11. Amortisseur selon la revendication 9, caractérisé par un agencement de commande (71), qui pour l'ajustage direct d'une pression déterminée du milieu de pression dans la chambre de pression (26) délivre une suite d'impulsions.

12. Amortisseur selon la revendication 11, caractérisé en ce que la suite d'impulsions peut être délivrée avec des fréquences différentes, pour l'ajustage direct d'une pression - déterminée du milieu d'amortissement dans la chambre de pression (26).

13. Amortisseur selon la revendication 11, caractérisé en ce que la suite d'impulsions peut être délivrée avec des intervalles de temps différents, pour l'ajustage direct d'une pression déterminée du milieu d'amortissement dans la chambre de pression (26).
